# FASCICULE DE BREVET EUROPEEN

(11) **EP 0 449 716 B1**
(45) Date de publication et mention de la délivrance du brevet: **24.08.1994**
(21) Numéro de dépôt: 91400799.2
(22) Date de dépôt: 25.03.1991
(51) Int. Cl.: H04L 9/32

(54) **Dispositif de condensation de données numériques**
Einrichtung zur Kondensation von digitalen Daten
System for condensing digital data

(30) Priorité: 26.03.1990 FR 9003831
(43) Date de publication de la demande: 02.10.1991
(73) Titulaire: FRANCE TELECOM, 75015 Paris (FR)
(72) Inventeur: Arditi, David, F-92140 Clamart (FR); Campana, Mireille, F-92140 Clamart (FR); Gilbert, Henri, F-91440 Bures sur Yvette (FR)
(74) Mandataire: Plaçais, Jean-Yves

(56) Documents cités:
- US-A- 4 309 569
- US-A- 4 885 777

## Description

L'invention concerne la condensation de données numériques. Elle trouve une application dans la protection de l'intégrité des données numériques.

L'homme du métier entend par "condensation" la transformation de façon non-falsifiable d'une suite de données numériques initiales en un bloc de données numériques résultat condensé. Le terme "condensé" s'explique par le fait que le bloc de données numériques résultat condensé a une longueur plus petite que celle de la suite de données numériques initiales.

La transformation est dite non-falsifiable (ou encore anti-collision) lorsqu'il est matériellement impossible avec les moyens de calcul actuellement disponibles de trouver deux suites de données numériques distinctes conduisant au même condensé et donc en particulier, étant donné une première suite de données numériques, de trouver une seconde suite de données numériques distinctes de ladite première suite et produisant le même condensé.

Généralement, l'homme du métier utilise la propriété anti-collision de la transformation de condensation pour protéger l'intégrité des données numériques notamment pour détecter les anomalies (changement, inversion, suppression, ou ajout de données numériques) d'ordre accidentel (erreurs matérielles) ou d'ordre intentionnel (manipulations volontaires frauduleuses) survenant sur des données numériques. Par exemple dans le cas d'un fichier informatique stocké sur un support quelconque, l'homme de métier calcule le condensé du fichier informatique à protéger et stocke ledit condensé dans une mémoire non-volatile. A chaque fois qu'il réutilise le fichier informatique, l'homme du métier calcule le condensé de ce dernier et compare le condensé ainsi calculé avec celui préalablement stocké. Le résultat de la comparaison permet théoriquement de déterminer ainsi l'existence d'anomalies étant survenues sur le fichier informatique à protéger.

La condensation de données numériques peut s'effectuer également dans le but de signer des messages informatiques. Dans ce cas, le message à signer est d'abord condensé puis une fonction de signature faisant intervenir un secret est appliquée sur le condensé.

Actuellement, les opérations de condensation de données numériques sont réalisées à partir d'algorithmes de chiffrement comme celui dit "Data Encryption Standard" (DES) auquel la propriété de sens unique de la dépendance en la clé de chiffrement confère la propriété anticollision à l'opération de condensation de données numériques.

L'inconvénient de tels algorithmes de chiffrement est la lenteur de leur exécution lorsque des moyens purement logiciels sont mis en oeuvre.

Dans le document "DESIGN PRINCIPLES FOR HASH FUNCTIONS" de I.B Damgard, proceding of Crypto 89, août 1989, il est proposé une solution pour construire une fonction de condensation opérant sur une suite de données numériques de taille quelconque à partir de fonctions élémentaires anticollision opérant sur des blocs de données numériques de taille fixe ou "Hash Functions". Plus précisément, ce document suggère l'utilisation de schémas de calcul de condensés de type parallélisable, se décomposant en une pluralité de modules de calcul mettant chacun en oeuvre une fonction élémentaire anticollision. Toutefois ce document ne décrit aucune construction effective d'une opération élémentaire anticollision, performante et rapide pour la condensation de données numériques.

L'invention vient justement apporter une solution à ce problème.

Un premier but de l'invention est de fournir un dispositif de condensation de données numériques réalisé à partir d'outils simples et rapides tels que des tables et des opérateurs logiques.

Un autre but de l'invention est de réaliser un dispositif de condensation de données pour des suites de données numériques de longueur quelconque.

Encore un autre but de l'invention est d'appliquer le dispositif de condensation de données à des dispositifs destinés à protéger l'intégrité de données numériques, tels que des dispositifs de certification ou de signature électronique.

La présente invention porte sur un dispositif électronique de traitement de données numériques, comportant :
- une entrée pour recevoir des données à traiter, et ;
- des moyens de traitement propres à transformer les données d'entrée, de façon non-falsifiable, en un bloc de données résultat condensé.

Selon une définition générale de l'invention, les moyens de traitement comprennent :
- des moyens propres à décomposer les données d'entrée au moins en un premier groupe comportant M premiers mots d'entrée de rang respectif I variant de 1 à M et formés chacun d'un même nombre B de données élémentaires, et un second groupe comportant M seconds mots d'entrée de rang respectif I variant de 1 à M et formés chacun d'un même nombre B de données élémentaires,
- des premiers moyens formant table à deux entrées respectivement de taille M et d'une valeur prédéterminée V représentative de la limite supérieure d'un indice de traitement K, pour des cellules dont le contenu possède une valeur entière variant de 1 à 2M,
- des seconds moyens formant table à deux entrées de taille M et V respectivement, pour des cellules dont le contenu possède une valeur entière variant de 1 à 2M,
- des troisièmes moyens formant table, à deux entrées de taille M et V respectivement, pour des cellules dont le contenu possède une valeur variant de 1 à 2^{B} pour définir un tableau de V.M mots auxiliaires,
- un opérateur composite propre à fournir une fonction spéciale à deux entrées de même taille B, réalisant un OU EXCLUSIF sur ces entrées, suivi d'une permutation non linéaire sur le résultat dudit OU EXCLUSIF,
- les moyens de traitement étant propres à :
   . a) initialiser l'indice de traitement K à 1 ;
   . b) établir une valeur initiale d'un mot intermédiaire courant pour un rang I égal à 1,
   . c) initialiser le rang I à 2,
   . d) remplacer le mot d'entrée du premier groupe de rang I par le mot d'entrée dont le groupe et le rang sont définis par le contenu de la cellule de la première table d'adresse d'entrée de taille M égale au rang I, ce qui donne un premier mot suppléant courant,
   . e) remplacer le mot d'entrée du second groupe de rang I par le mot d'entrée dont le groupe et le rang sont définis par le contenu de la cellule de la seconde table d'adresse d'entrée de taille M égale au rang I, ce qui donne un second mot suppléant courant,
   . f) appliquer respectivement le second mot suppléant courant et le mot auxiliaire contenu dans la cellule du tableau auxiliaire dont l'adresse d'entrée de taille M présente une valeur égale au rang I, aux entrées de l'opérateur composite, ce qui donne un premier mot-terme,
   . g) appliquer respectivement le premier mot suppléant courant et le premier mot-terme aux entrées de l'opérateur composite, ce qui donne un second mot-terme,
   . h) appliquer respectivement le mot intermédiaire initial courant et le second mot-terme aux entrées de l'opérateur composite, ce qui donne un nouveau mot intermédiaire courant,
   . i) répéter sélectivement les opérations d) à h) en incrémentant à chaque fois le rang I, jusqu'à atteindre la valeur M, ce qui donne un mot résultat de B données élémentaires pour un indice de traitement de valeur K,
   . j) répéter sélectivement les opérations b) à i) en incrémentant à chaque fois l'indice de traitement K, jusqu'à atteindre la limite supérieure de cet indice, ce qui permet d'obtenir un bloc de données résultat condensé de V mots résultat.

Selon un mode de réalisation particulier de l'invention, les moyens de traitement pour établir la valeur initiale d'un mot intermédiaire courant pour un rang I égal à 1, sont propres à :
- remplacer le mot d'entrée du premier groupe de rang 1 par le mot d'entrée dont le groupe et le rang sont définis par le contenu de la cellule de la première table d'adresse d'entrée de taille M égale au rang 1, ce qui donne un troisième mot suppléant courant,
- remplacer le mot d'entrée du second groupe de rang 1 par le mot d'entrée dont le groupe et le rang sont définis par le contenu de la cellule de la seconde table d'adresse de taille M égale au rang 1, ce qui donne un quatrième mot suppléant courant,
- appliquer respectivement le quatrième mot suppléant courant et le mot auxiliaire contenu dans la cellule du tableau auxiliaire dont l'adresse d'entrée de taille M présente une valeur égale au rang 1, aux entrées de l'opérateur composite, ce qui donne un troisième mot-terme;
- appliquer respectivement le troisième mot suppléant courant et le troisième mot-terme aux entrées de l'opérateur composite, ce qui donne le mot intermédiaire initial pour un rang 1.

En pratique, la limite supérieure V de l'indice de traitement K est égale à M.

Selon un mode de réalisation préféré de l'invention, l'opérateur composite possède une troisième table à deux entrées respectivement de taille 2^{B1} et 2^{B2} respectivement, telles que, B1 et B2 étant des entiers non nuls, la somme des exposants B1 et B2 est égale à B, pour des cellules dont le contenu possède une valeur variant de 1 à 2^{B} et propres à définir une permutation, non linéaire, sur l'ensemble produit d'ordre B de |0,1| étendue à 2.M. mots, et un opérateur à deux entrées de même taille B, du genre OU EXCLUSIF, la sortie de l'opérateur OU EXCLUSIF interagissant avec les entrées de la troisième table pour fournir la fonction spéciale.

En pratique, lorsque la longueur de l'ensemble des données à traiter est différente de 2.M.B données élémentaires, le dispositif comprend en outre des moyens de traitement supplémentaires comprenant :
- des moyens pour compléter la valeur de la longueur de l'ensemble des données à traiter jusqu'à obtenir une longueur d'une valeur multiple de M.B données élémentaires et supérieur à 2 M.B, ce qui permet d'obtenir une pluralité de groupes comportant chacun M mots formés respectivement d'un nombre B de données élémentaires ;
- des moyens propres à répéter sélectivement les opérations a) à j) en appliquant à chaque fois un couple de groupes de mots de M.B données élémentaires jusqu'à n'avoir plus qu'un seul groupe de mots résultant de M.B données élémentaires ;
- ce groupe de mots résultant étant ledit bloc de données résultat condensé.

Avantageusement, la longueur de l'ensemble des données à traiter est complétée jusqu'à atteindre la plus petite longueur qui soit paire, égale au produit de M.B par une puissance entière de 2 et la répétition sélective des opérations a) à j) sur la pluralité des groupes de mots de M.B données élémentaires s'effectue selon une arborescence binaire inverse.

La présente invention porte également sur l'application du dispositif conforme à l'invention à des dispositifs de certification ou de signature de données numériques.

D'autres caractéristiques et avantages de l'invention apparaîtront à la lumière de la description et des dessins annexés dans lesquels :
- la figure 1 est une vue générale représentative du dispositif de condensation de données numériques selon l'invention ;
- la figure 2 illustre schématiquement la décomposition des données numériques à traiter ;
- les figures 3 et 4 représentent chacune un tableau à deux entrées de tailles M et V propres à définir ensemble V permutations sur l'ensemble |1,2M| ;
- la figure 5 représente schématiquement un opérateur composite possédant une table à deux entrées de taille 2M et B et un opérateur OU EXCLUSIF à deux entrées de taille B ;
- la figure 6 est un tableau représentatif d'une table à deux entrées respectivement de taille P1 et P2 pour des cellules propres à définir une permutation non linéaire sur l'ensemble produit d'ordre B de |0,1| étendu à 2.M mots ;
- la figure 7 est un tableau représentatif d'une table à deux entrées de taille M et V pour des cellules dont le contenu possède une valeur variant de 1 à 256 pour définir un tableau de V.M mots auxiliaires ;
- la figure 8 illustre schématiquement le fonctionnement de l'opération de condensation des données numériques selon l'invention ;
- la figure 9 illustre schématiquement la décomposition de l'ensemble des données numériques à traiter en couple de groupes de M.B données élémentaires chacun ;
- la figure 10 illustre un autre exemple de décomposition de l'ensemble des données numériques à traiter en couple de groupes de M.B données élémentaires chacun ; et
- la figure 11 illustre schématiquement l'application du dispositif selon l'invention à des dispositifs d'authentification.

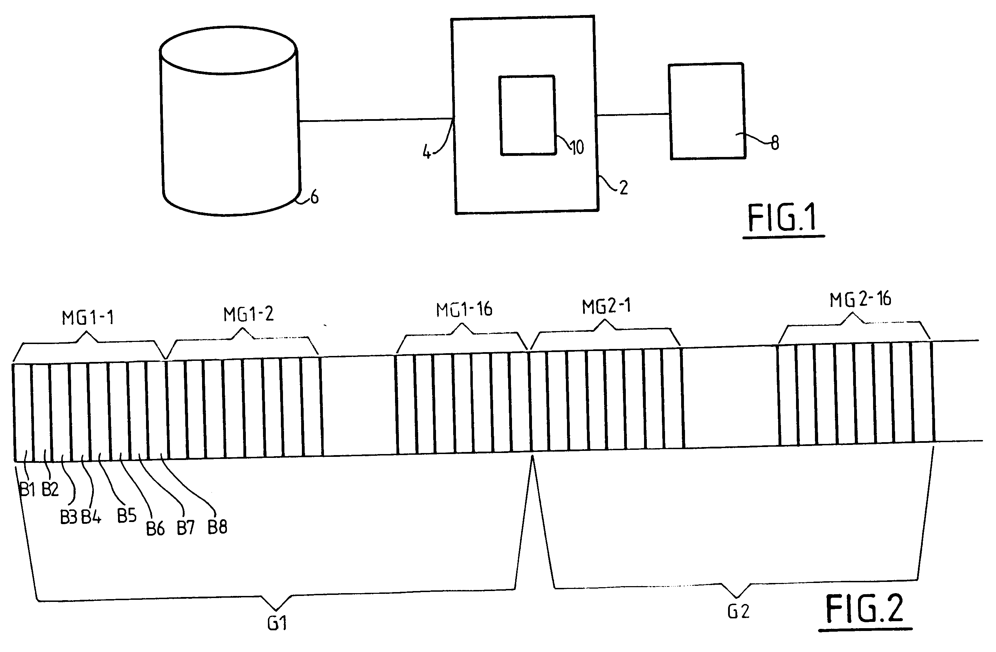

Sur la figure 1, le dispositif électronique de traitement de données numériques 2 selon l'invention comprend une entrée 4 pour recevoir les données à traiter 6. Des moyens de traitement 10 logés à l'intérieur du dispositif électronique 2 transforment les données d'entrée, de façon non-réversible, en un bloc de données résultat condensé 8.

Sur la figure 2, on a représenté une suite de données numériques à traiter. Les moyens de traitement 10 du dispositif selon l'invention décomposent tout d'abord les données d'entrée au moins en un premier groupe G1 comportant M premiers mots formés chacun d'un même nombre B de données élémentaires d'entrée MG1-I de rang respectif I variant de 1 à M, et en un second groupe G2 comportant M seconds mots d'entrée MG2-I de rang respectif I variant de 1 à M, formés chacun d'un même nombre B de données élémentaires.

Ici, on a illustré un exemple de décomposition des données élémentaires en un groupe G1 composé de 16 mots (MG1-1 à MG1-16) et en un groupe G2 composé de 16 mots (MG2-1 à MG2-16). Ici, les mots MG1-1 à MG2-16 sont des octets (B1 à B8) .

Selon l'invention, le dispositif opère sur ces deux groupes de mots G1, G2 une transformation non-réversible aboutissant à un bloc de données résultat condensé C de longueur M.B.

Selon l'invention, le dispositif effectue cette transformation non-réversible à l'aide de moyens de traitement comprenant des outils simples et rapides, ne nécessitant que peu de mémoires de calcul.

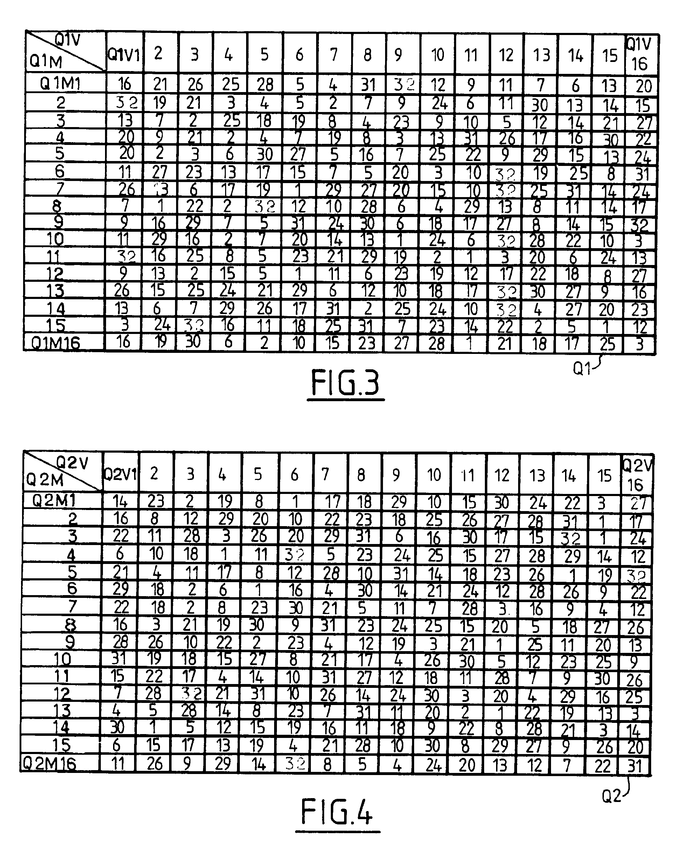

Sur la figure 3, on a représenté le premier de ces outils. Il s'agit d'une table Q1 à deux entrées Q1M et Q1V de tailles M et V respectivement. M est égal ici à 16 tandis que la valeur V est représentative de la limite supérieure d'un indice de traitement K. Ici, V est également égal à 16. L'entrée Q1M est individualisée selon son adresse en Q1M1 à Q1MM avec M variant ici de 1 à 16. De même, l'entrée Q1V est individualisée selon son adresse en Q1V1 à Q1VV avec V variant ici de 1 à 16.

La table Q1 comprend des cellules dont le contenu possède une valeur variant de 1 à 2M.

Sur la figure 4, on a représenté le second de ces outils. Il s'agit d'une autre table Q2 à deux entrées Q2M et Q2V de tailles M et V respectivement. Les cellules possèdent un contenu dont la valeur varie de 1 à 2M. L'entrée Q2V est individualisée selon son adresse en Q2V1 à Q2VV avec V variant ici de 1 à 16. De même, l'entrée Q2M est individualisée selon son adresse en Q2M1 à Q2MM avec M variant ici de 1 à 16. Les cellules des tables Q1 et Q2 permettent ensemble de définir V permutations sur l'ensemble |1,2M|.

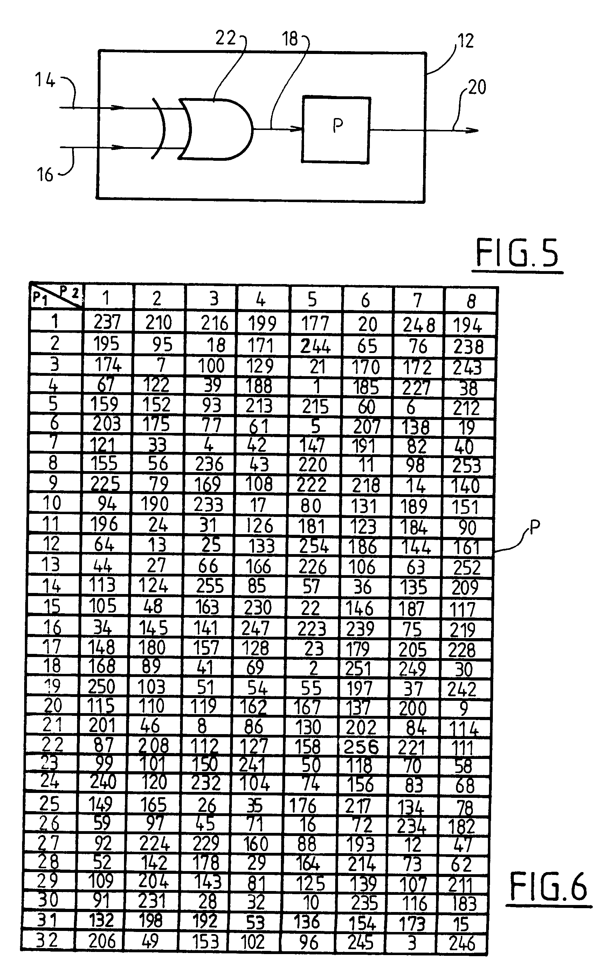

Sur la figure 5, on a représenté le troisième de ces outils. Il s'agit d'un opérateur composite 12 fournissant une fonction spéciale à deux entrées 14 et 16 de même taille B, réalisant un OU EXCLUSIF sur ses entrées, suivi d'une permutation non linéaire sur le résultat 18 dudit OU EXCLUSIF.

Plus précisément, l'opérateur composite 12 possède un opérateur du genre OU EXCLUSIF 22 et une table P à deux entrées P1 et P2 pour des cellules dont le contenu possède une valeur variant de 1 à 256 (2⁸). La sortie 18 de l'opérateur OU EXCLUSIF 22 interagit avec les entrées P1 et P2 de la table P pour fournir la fonction spéciale.

Sur la figure 6, on a représenté un tableau représentatif de la table P. La table P est une table à deux entrées P1 et P2 de taille 2^{B1} et 2^{B2}, telles que B1 et B2 étant des entiers non nuls, la somme des exposants B1 et B2 est égale à B. Ici, B1 est égal à 5 (2⁵=32) et B2 est égal à 3 (2³=8). Bien entendu, B1 et B2 peuvent présenter d'autres valeurs.

Les cellules de la table P sont propres à définir une permutation, non linéaire, sur l'ensemble produit d'ordre B de |0,1| étendu à 2.M mots, c'est-à-dire sur un ensemble de 2.M mots de B données élémentaires chacun, les données élémentaires (bits) ayant une valeur égale à 0 ou à 1.

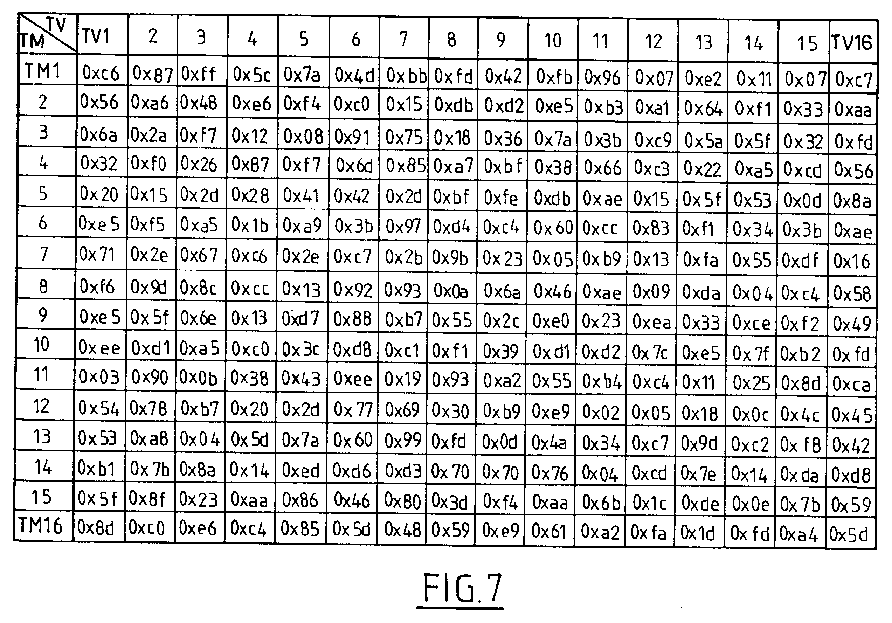

Sur la figure 7, on a représenté le quatrième de ces outils. Il s'agit d'une table T, à deux entrées TM et TV de tailles M et V respectivement. Les cellules de cette table ont un contenu dont la valeur varie de 1 à 256 (2⁸). Cette table définit un tableau de V.M mots auxiliaires constants. Ici, le contenu des cellules est écrit en hexadécimal. L'entrée TM est individualisée selon son adresse en TM1 à TMM avec M variant ici de 1 à 16. L'entrée TV est individualisée selon son adresse en TV1 à TVM avec V variant ici de 1 à 16.

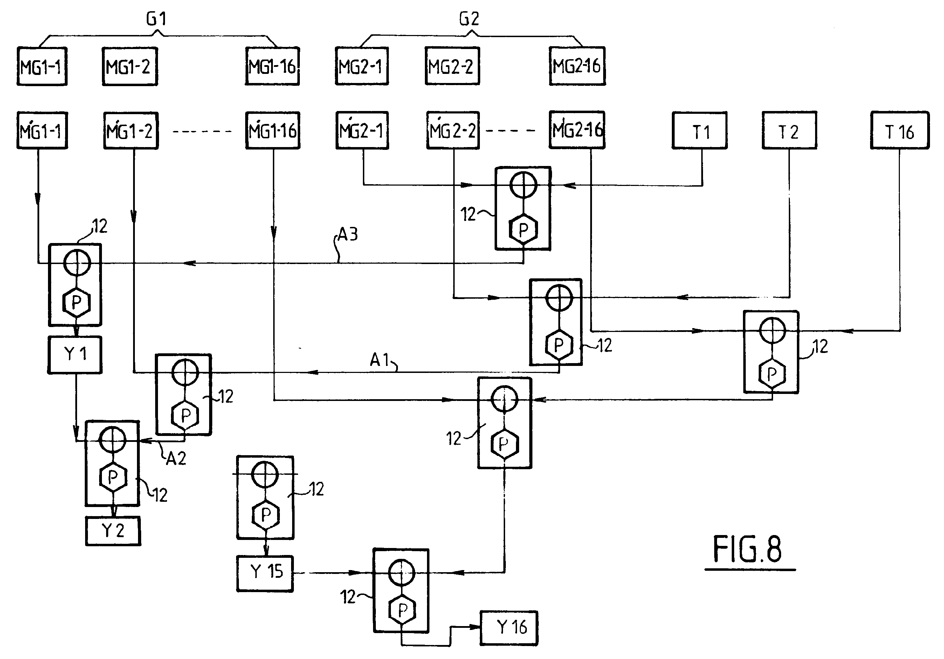

Sur la figure 8, on retrouve les mots MG1-1 à MG1-16 du groupe G1 de rang I respectif variant de 1 à 16 et les mots MG2-1 à MG2-16 du groupe G2 de rang respectif I variant de 1 à 16. Sur ces deux groupes de mots G1 et G2, les moyens de traitement 10 vont exécuter une opération de condensation de données numériques en vue d'obtenir un bloc de données résultat condensé C de même taille que celui du groupe G1 ou du groupe G2.

Pour cela, les moyens de traitement 10 initialisent tout d'abord l'indice de traitement K à la valeur 1. Ensuite ils établissent une valeur initiale d'un mot intermédiaire Y1 courant pour un rang I égal à 1. Puis, ils initialisent le rang I à 2. Enfin, ils remplacent le mot MG1-2 du premier groupe G1 de rang I (ici I=2) par le mot d'entrée dont le groupe et le rang sont définis par le contenu de la cellule de la première table Q1 d'adresse d'entrée de taille M Q1M-2 égale au rang 2, ce qui donne un premier mot suppléant M′G1-2. Ainsi, le contenu de la cellule de Q1 se trouvant aux adresses d'entrée Q1M-2 et Q1V-1 (ici I=2 et K=1), c'est-à-dire 32, définit le groupe et le rang du mot suppléant M′G1-2 qui remplace MG1-2. Par conséquent, ici MG2-16 supplée MG1-2 et devient M′G1-2. Par ailleurs, le mot d'entrée MG2-2 du second groupe G2 de rang I (ici I=2) est remplacé par le mot d'entrée dont le groupe et le rang sont définis par le contenu de la cellule de la seconde table Q2 d'adresse d'entrée de taille M Q2M-2 égale au rang 2, ce qui donne un second mot suppléant M′G2-2.

Ainsi, le contenu de la cellule de Q2 se trouvant aux adresses d'entrée Q2M-2 et Q2V-1 (ici I=2 et K=1), c'est-à-dire 16, définit le groupe et le rang du mot suppléant M′G2-2 qui remplace le mot MG2-2. Par conséquent ici, MG1-16 supplée MG2-2 et devient M′G2-2.

Ensuite, les moyens de traitement appliquent respectivement le mot suppléant M′G2-2 et le mot auxiliaire T2 contenu dans la cellule du tableau auxiliaire dont l'adresse d'entrée TM de taille M présente une valeur égale au rang I (ici I=2 et toujours par un indice de traitement K=1), aux entrées de l'opérateur composite 12, ce qui donne un premier mot-terme A1.

Puis le mot suppléant M′G1-2 et le mot-terme A1 sont appliqués aux entrées de l'opérateur composite 12, ce qui donne un second mot-terme A2.

Ensuite, le mot intermédiaire courant préalablement défini Y1 et le second mot-terme A2 sont appliqués respectivement aux entrées de l'opérateur composite 12, ce qui donne un nouveau mot intermédiaire courant Y2.

Le mot intermédiaire courant préalablement défini Y1, de rang I=1 et pour un indice de traitement K égal à 1, est obtenu à la suite des opérations suivantes.

Tout d'abord, le mot d'entrée MG1-1 du premier groupe G1 de rang 1 est remplacé par le mot d'entrée dont le groupe et le rang sont définis par le contenu de la cellule de la première table Q1 d'adresse d'entrée de taille M Q1M-1 égale au rang 1, ce qui donne un mot suppléant M′G1-1.

Ainsi, le contenu de la cellule de Q1 se trouvant aux adresses d'entrée Q1M-1 et Q1V-1 (ici K=1 et I=1), c'est-à-dire ici 16, définit le groupe et le rang du mot suppléant M′G1-1 qui remplace MG1-1. Par conséquent, ici MG1-16 supplée MG1-1 et devient M′G1-1.

Par ailleurs, le mot d'entrée MG2-1 du second groupe G2 de rang 1 est remplacé par le mot d'entrée dont le groupe et le rang sont définis par le contenu de la cellule de Q2 d'adresse d'entrée de taille M Q2M-1 égale au rang 1, ce qui donne un mot suppléant M′G2-1.

Ainsi, le contenu de la cellule de Q2 se trouvant aux adresses d'entrée Q2M-1 et Q2V-1 (ici K=1 et I=1), c'est-à-dire 14, définit le groupe et le rang du mot suppléant MG2-1 qui remplace MG2-1. Par conséquent, ici MG1-14 supplée MG2-1 et devient M′G2-1.

Ensuite, le mot suppléant M′G2-1 et le mot auxiliaire T1 contenu dans la cellule dont l'adresse d'entrée TM1 de taille M présente une valeur égale au rang 1 (pour un indice de traitment K=1) sont respectivement appliqués aux entrées de l'opérateur composite 12, ce qui donne un mot-terme A3.

Enfin, le mot suppléant M′G1-1 et le mot-terme A3 sont respectivement appliqués aux entrées de l'opérateur composite 12, ce qui donne le mot intermédiaire initial Y1.

Toutes ces opérations sont répétées sélectivement en incrémentant à chaque fois le rang I jusqu'à atteindre la valeur I=M, ce qui permet d'obtenir un mot résultat Y16 de B données élémentaires.

Ainsi, pour un indice de traitement choisi, ici K=1, on obtient un mot résultat Y16 qui est représentatif des mots MG1-1 à MG2-16 des deux groupes G1 et G2.

Enfin, ces opérations sont répétées sélectivement en incrémentant à chaque fois l'indice de traitement K jusqu'à atteindre la limite supérieure V de cet indice de traitement, ce qui permet d'obtenir V mots résultat Y16 constituant le bloc de données résultat condensé.

Ici, la limite supérieure V de l'indice de traitement K est égale à M, ce qui permet d'obtenir un bloc de données résultat condensé de M.B données élémentaires.

La propriété de non-falsification de la transformation est due au fait que chacun des V mots résultat Y16 dépend des mots MG1-1 à MG2-16 et cela de façon unique et spécifique. En effet chaque mot MG1-I à MG2-16 intervient une seule fois dans le calcul des V mots résultat Y16. Il y a lieu de remarquer en outre que lorsque l'on fixe 2M-1 mots d'entrée, la fonction de condensation réalise pour tout K variant de 1 à 16, une bijection entre le mot d'entrée non fixé et le mot résultat Y16 correspondant.

L'opération de condensation de données numériques décrite en référence aux figures 1 à 8 travaille sur deux opérandes de M.B données élémentaires chacun pour donner un résultat de M.B données élémentaires.

Les Demandeurs se sont posés le problème d'appliquer cette opération de condensation à un ensemble de données de longueur arbitraire.

La solution proposée par les Demandeurs consiste tout d'abord à compléter la valeur de la longueur de l'ensemble des données à traiter jusqu'à obtenir une valeur multiple de M.B données élémentaires et supérieure à 2 M.B données élémentaires et enfin à répéter sélectivement l'opération de condensation décrite précédemment à chaque couple de groupes formés de M.B données élémentaires.

Avantageusement, la complémentation jusqu'à obtenir une longueur d'une valeur multiple de M.B données élémentaires permet ensuite d'effectuer une opération de condensation plus symétrique. Par exemple, c'est un générateur de bits qui effectue la complémentation. En pratique, le premier bit ajouté a une valeur égale à 1 tandis que les autres bits ajoutés ont une valeur 0.

Selon un mode de réalisation préféré de l'invention, l'ensemble des données à traiter est décomposé en couples b de groupes constitués chacun d'un premier groupe G1 comportant M premiers mots formés chacun d'un même nombre B de données élémentaires, et en un second groupe G2 comportant M seconds mots formés chacun d'un même nombre B de données élémentaires. Les moyens de traitement répètent alors sélectivement les opérations précédentes pour chaque couple b de groupes G1 et G2 ainsi obtenu jusqu'à n'avoir plus qu'un seul groupe de mots résultant C, ce groupe de mots étant ledit bloc de données condensés C.

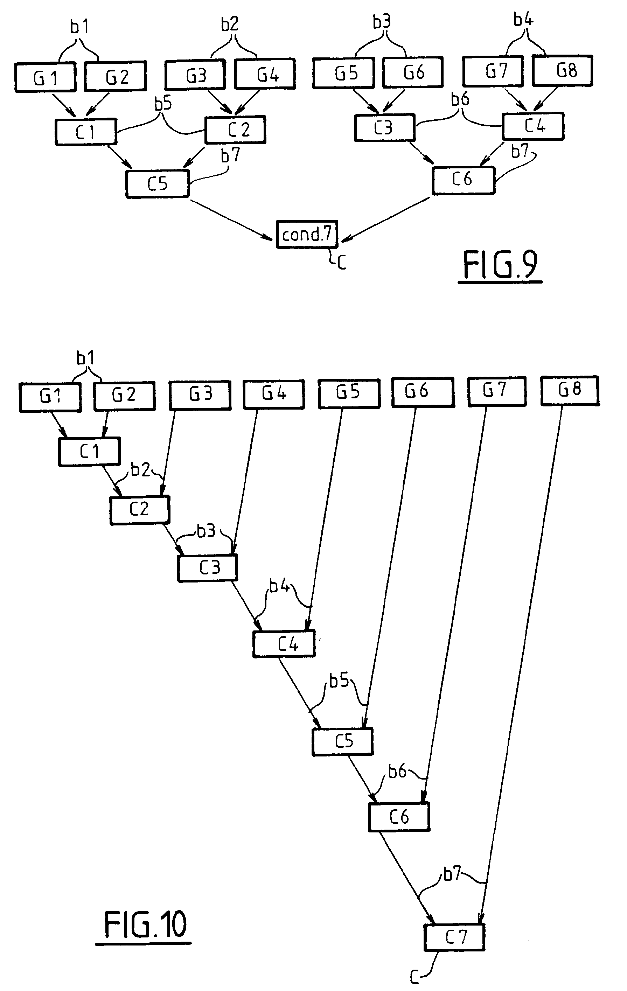

Sur la figure 9, on a représenté un exemple de condensation de quatre couples b de groupes de mots.

Il s'agit ici d'un traitement par récurrence selon une arborescence binaire inverse. Plus précisément, le premier couple b1 de groupes de mots G1 et G2 se transforme en un condensé C1 ; le second couple b2 de groupes de mots G3 et G4 se transforme en un condensé C2 ; le couple b3 de groupes de mots G5 et G6 se transforme en un condensé C3 et le couple b4 de groupe de mots G7 et G8 se transforme en un condensé C4. Ensuite le couple b5 des condensés C1 et C2 se transforme en un condensé C5 tandis que le couple b6 formé des condensés C3 et C4 se transforme en un condensé C6. Enfin, les condensés C5 et C6 se transforment en un condensé C7 représentatif du bloc de données résultat condensé C des groupes de mots G1 à G8.

Sur la figure 10, on a représenté un autre exemple de traitement de huit groupes de mots. Ici, il s'agit d'un traitement en série. Plus précisément le couple b1 formé des groupes G1 et G2 se transforme en un condensé C1. Le couple b2 formé du condensé C1 et du groupe G3 se transforme en un condensé C2 et ainsi de suite jusqu'au couple b7 formé du condensé C6 et du groupe G8, le couple b7 se transformant en un condensé C7 représentatif du bloc de données résultat condensé C de groupes de mots G1 à G8.

Le dispositif de condensation de données numériques décrit en référence aux figures 1 à 10 peut être utilisé dans de nombreuses applications de sécurisation de données numériques grâce à sa propriété de non-falsification.

Par exemple, le dispositif de condensation de données numériques selon l'invention peut être appliqué à des dispositifs de certification ou de vérification d'intégrité de fichiers informatiques. L'opération de condensation de données numériques décrite en référence aux figures 1 à 10 est utilisée une première fois pour calculer le condensé des fichiers à protéger. Le condensé obtenu est stocké dans une mémoire non-volatile du type ROM (Read Only Memory). Ensuite, à chaque fois que le fichier à protéger est utilisé, le condensé de celui-ci est recalculé à l'aide de l'opération de condensation de données décrite en référence aux figures 1 à 10. La comparaison du condensé ainsi obtenu avec celui préalablement stocké permet de déterminer les éventuelles altérations ou anomalies contenues dans les fichiers à protéger.

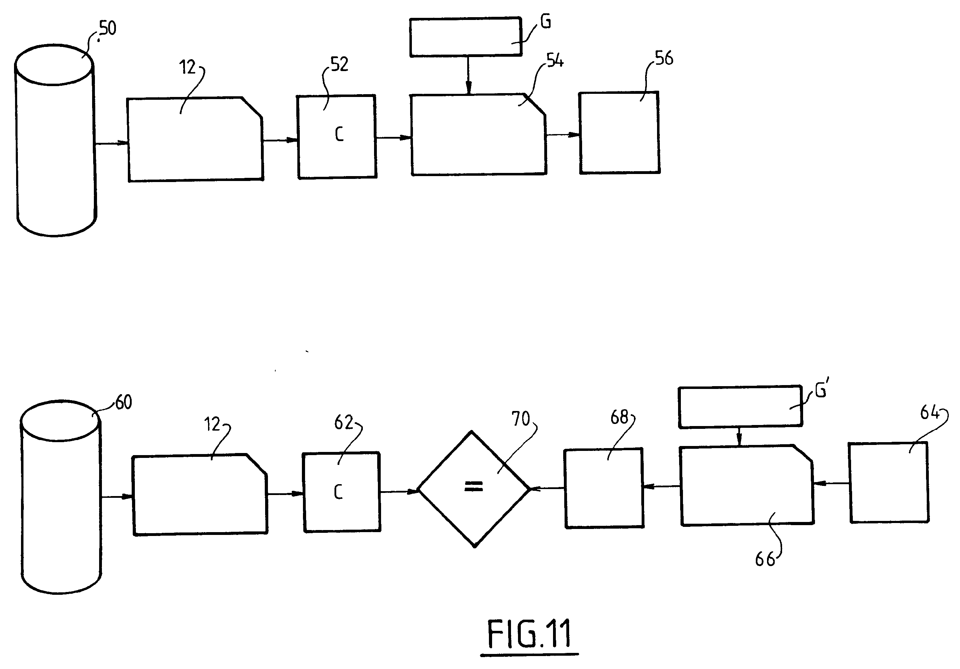

Sur la figure 11, on a représenté l'application du dispositif de condensation numérique à des dispositifs de signature.

Les données à traiter 50 sont transformées par le dispositif de condensation de données numériques 12 décrit en référence aux figures 1 à 10 pour donner un bloc de données résultat condensé 52. Ce bloc de données résultat condensé C est signé à l'aide d'une fonction de signature dépendant d'une clé secrète G. La clé secrète G peut être connue du seul signataire (signature à clé publique) ou du signataire et du destinataire (signature à clé secrète). Les données ainsi condensées puis signées 54 ainsi que les données 50 sont transmises via un moyen 56 quelconque.

A la réception, les données telles que reçues 60 sont condensées par un dispositif de condensation 12 selon l'invention pour obtenir un autre condensé 62. De même, les données condensées et signées telles que reçues 64 sont déchiffrées à l'aide d'une fonction de vérification de signature dépendant d'une clé secrète G′. Cette fonction G′ est une fonction à clé secrète dans le cas où la signature préalable est de type à clé secrète ou à clé publique dans le cas d'une signature de type à clé publique. Ensuite, le résultat de la comparaison 70 du condensé 62 avec le condensé déchiffré 68 permet de vérifier la signature des données numériques.

En variante, la signature à clé secrète peut être réalisée à partir de l'opération de condensation décrite en référence aux figures 1 à 10.

## Revendications

1. Dispositif électronique de traitement de données numériques, comportant :
- une entrée (4) pour recevoir des données à traiter ; et
- des moyens de traitement (10) propres à transformer les données d'entrée, de façon non-falsifiable, en un bloc de données résultat condensé,
caractérisé en ce que les moyens de traitement (10) comprennent :
- des moyens propres à décomposer les données d'entrée au moins en un premier groupe (G1) comportant M premiers mots d'entrée (MG1-I) de rang respectif I variant de 1 à M et formés chacun d'un même nombre B de données élémentaires, et en un second groupe (G2) comportant M seconds mots d'entrée (MG2-I) de rang respectif I variant de 1 à M et formés chacun d'un même nombre B de données élémentaires ;
- des premiers moyens formant table (Q1) à deux entrées (Q1M et Q1V) de taille M et d'une valeur prédéterminée V représentative de la limite supérieure d'un indice de traitement K respectivement, pour des cellules dont le contenu possède une valeur entière variant de 1 à 2M;
- des seconds moyens formant table (Q2) à deux entrées (Q2M et Q2V) de tailles M et V respectivement, pour des cellules dont le contenu possède une valeur entière variant de 1 à 2M;
- des troisièmes moyens formant table (T), à deux entrées (TV et TM) de tailles V et M respectivement, pour des cellules dont le contenu possède une valeur entière variant de 1 à 2^{B} pour définir un tableau de V.M mots auxiliaires ;
- un opérateur composite (12) propre à fournir une fonction spéciale à deux entrées de même taille B, réalisant un OU EXCLUSIF sur ces entrées (14, 16), suivie d'une permutation non linéaire sur le résultat dudit OU EXCLUSIF ;
en ce que les moyens de traitement sont propres à :
. a) initialiser l'indice de traitement K à 1 ;
. b) établir une valeur initiale d'un mot intermédiaire courant (Y1) pour un rang I égal à 1;
. c) initialiser le rang I à 2;
. d) remplacer le mot d'entrée (MG1-2) du premier groupe (G1) de rang I par le mot d'entrée dont le groupe et le rang sont définis par le contenu de la cellule de la première table (Q1) d'adresse d'entrée de taille M (Q1M-2) égale au rang I, ce qui donne un premier mot suppléant (M′G1-2);
. e) remplacer le mot d'entrée (MG2-2) du second groupe (G2) du rang I par le mot d'entrée dont le groupe et le rang sont définis par le contenu de la cellule de la seconde table (Q2) d'adresse d'entrée de taille M (Q2M-2) égale au rang I, ce qui donne un second mot suppléant (M′G2-2) ;
. f) appliquer respectivement le second mot suppléant courant (M′G2-2) et le mot auxiliaire (T2) contenu dans la cellule du tableau auxiliaire (T) dont l'adresse d'entrée de taille M (TM) présente une valeur égale au rang I, aux entrées de l'opérateur composite (12), ce qui donne un premier mot-terme (A1) ;
. g) appliquer respectivement le premier mot suppléant courant (M′G1-2) et le premier mot-terme (A1) aux entrées de l'opérateur composite, ce qui donne un second mot-terme (A2) ;
. h) appliquer respectivement le mot intermédiaire courant (Y1) et le second mot-terme (A2) aux entrées de l'opérateur composite, ce qui donne un nouveau mot intermédiaire courant (Y2) ;
. i) répéter sélectivement les opérations d) à h) en incrémentant à chaque fois le rang I, jusqu'à atteindre la valeur M, ce qui donne un mot résultat (Y16) de B données élémentaires pour un indice de traitement de valeur K;
. j) répéter sélectivement les opérations b) à i) en incrémentant à chaque fois l'indice de traitement, jusqu'à atteindre la limite supérieure de cet indice, ce qui permet d'obtenir un bloc de données résultat condensé de V mots résultat de B données élémentaires chacun.

2. Dispositif selon la revendication 1, caractérisé en ce que les moyens de traitement, pour établir la valeur initiale d'un mot intermédiaire courant (Y1) pour un rang I égal à 1, sont propres à :
- remplacer le mot d'entrée (MG1-1) du premier groupe (G1) de rang I par le mot d'entrée dont le groupe et le rang sont définis par le contenu de la cellule de la première table (Q1) d'adresse d'entrée de taille M (Q1M-1) égale au rang I,ce qui donne un troisième mot suppléant courant (M′G1-1) ;
- remplacer le mot d'entrée (MG2-1) du second groupe (G2) de rang I par le mot d'entrée dont le groupe et le rang sont définis par le contenu de la cellule de la seconde table (Q2) d'adresse d'entrée de taille M (Q2M-1) égale au rang I, ce qui donne un quatrième mot suppléant (M′G2-1) ;
- appliquer respectivement le quatrième mot suppléant courant (M′G2-1 ) et le mot auxiliaire (T1) contenu dans la cellule du tableau auxiliaire (T) dont l'adresse d'entrée de taille M (TM) présente une valeur égale au rang I, aux entrées de l'opérateur composite (12), ce qui donne un troisième mot-terme (A3);
- appliquer respectivement le troisième mot suppléant courant (M′G1-1) et le troisième mot-terme (A3) aux entrées de l'opérateur composite (12), ce qui donne le mot intermédiaire initial (Y1) pour un rang 1.

3. Dispositif selon la revendication 1, caractérisé en ce que la limite supérieure V de l'indice de traitement K est égale à M.

4. Dispositif selon la revendication 1, caractérisé en ce que l'opérateur composite (12) possède une troisième table P à deux entrées (P1 et P2) de taille 2^{B1} et 2^{B2} respectivement, telles que, B1 et B2 étant des entiers non nuls, la somme des exposants B1 et B2 est égale à B, par des cellules dont le contenu possède une valeur variant de 1 à 2^{B} et propres à définir une permutation, non linéaire, sur l'ensemble produit d'ordre B de |0,1| étendu à 2.M mots, et un opérateur (22) à deux entrées de même taille B, du genre OU EXCLUSIF, la sortie (18) de l'opérateur OU EXCLUSIF interagissant avec les entréee (P1 et P2) de la troisième table (P) pour fournir la fonction spéciale.

5. Dispositif dans lequel la longueur de l'ensemble des données à traiter est différente de 2.M.B données élémentaires selon la revendication 1, caractérisé en ce que le dispositif comprend en outre des moyens de traitement supplémentaires comprenant :
- des moyens pour compléter la valeur de la longueur de l'ensemble des données à traiter jusqu'à obtenir une longueur d'une valeur multiple de M.B données élémentaires, et supérieure à 2 M.B données élémentaires, ce qui permet d'obtenir une pluralité de groupes comportant chacun M mots formés respectivement d'un nombre B de données élémentaires ;
- des moyens propres à répéter sélectivement les opérations a) à j) en appliquant à chaque fois un couple de groupes de mots de M.B données élémentaires, jusqu'à n'avoir plus qu'un seul groupe de mots résultant de M.B données élémentaires ;
- ce groupe de mots résultant étant ledit bloc de données résultat condensé.

6. Dispositif selon la revendication 5, caractérisé en ce que la répétition sélective des opérations a) à j) sur la pluralité des groupes de mots de M.B données élémentaires s'effectue selon une arborescence binaire inverse.

7. Application du dispositif selon l'une quelconque des revendications 1 à 6 à des dispositifs de certification ou de signature de données numériques.

## Patentansprüche

1. Elektronische Vorrichtung zur Verarbeitung von digitalen Daten, umfassend:
- einen Eingang (4) zum Empfangen von zu verarbeitenden Daten; und
- eine Verarbeitungseinrichtung (10), die in der Lage ist, die Eingangsdaten auf nichtfälschbare Weise in einen komprimierten Resultat-Datenblock umzuwandeln,
dadurch gekennzeichnet,
daß die Verarbeitungseinrichtung (10) folgendes aufweist:
- eine Einrichtung, die in der Lage ist, die Eingangsdaten in mindestens eine erste Gruppe (G1) von M ersten Eingangswörtern (MG1-I) vom jeweiligen Rang I von 1 bis M, die jeweils aus einer gleichen Anzahl B von Elementardaten bestehen, und in eine zweite Gruppe (G2) von M zweiten Eingangswörtern (MG2-I) vom jeweiligen Rang I von 1 bis M, die jeweils aus einer gleichen Anzahl B von Elementardaten bestehen, zu zerlegen;
- eine erste, eine Tabelle (Q1) bildende Einrichtung mit zwei Eingängen (Q1M und Q1V) von der Größe M und von einem vorbestimmten Wert V, der jeweils die obere Grenze eines Verarbeitungsindex K darstellt, für Zellen, deren Inhalt einen ganzzahligen Wert von 1 bis 2M besitzt;
- eine zweite, eine Tabelle (Q2) bildende Einrichtung mit zwei Eingängen (Q2M und Q2V) mit Größen M bzw. V für Zellen, deren Inhalt einen ganzzahligen Wert von 1 bis 2M besitzt;
- eine dritte, eine Tabelle (T) bildende Einrichtung mit zwei Eingängen (TV und TM) mit Größen V bzw. M für Zellen, deren Inhalt einen ganzzahligen Wert von 1 bis 2^{B} besitzt, zur Bildung einer Tabelle von V·M Zusatzwörtern;
- einen zusammengesetzten Operator (12), der in der Lage ist, eine spezielle Funktion mit zwei Eingängen derselben Größe B zu liefern, die eine Exklusiv-ODER-Verknüpfung an diesen Eingängen (14, 16) herstellt und an die sich eine nichtlineare Permutation bei dem Resultat dieser Exklusiv-ODER-Verknüpfung anschließt;
daß die Verarbeitungseinrichtung in der Lage ist, folgendes auszuführen:
. a) den Verarbeitungsindex K bei 1 zu initialisieren;
. b) einen Anfangswert eines laufenden Zwischenworts (Y1) bei einem Rang I gleich 1 zu erstellen;
. c) den Rang I bei 2 zu initialisieren;
. d) das Eingangswort (MG1-2) der ersten Gruppe (G1) vom Rang I durch das Eingangswort zu ersetzen, dessen Gruppe und dessen Rang durch den Inhalt der Zelle der ersten Tabelle (Q1) mit der Eingangsadresse der Größe M (Q1M-2) gleich dem Rang I definiert sind, was ein erstes Ersatzwort (M′G1-2) ergibt;
. e) das Eingangswort (MG2-2) der zweiten Gruppe (G2) vom Rang I durch das Eingangswort zu ersetzen, dessen Gruppe und dessen Rang durch den Inhalt der Zelle der zweiten Tabelle (Q2) mit der Eingangsadresse der Größe M (Q2M-2) gleich dem Rang I definiert sind, was ein zweites Ersatzwort (M′G2-2) ergibt;
. f) das zweite laufende Ersatzwort (M'G2-2) und das Zusatzwort (T2), das in der Zelle der Zusatztabelle (T) enthalten ist, deren Eingangsadresse der Größe M (TM) einen Wert gleich dem Rang I besitzt, jeweils an die Eingänge des zusammengesetzten Operators (12) anzulegen, was ein erstes Endwort (A1) ergibt;
. g) das erste laufende Ersatzwort (M′G1-2) und das erste Endwort (A1) jeweils an die Eingänge des zusammengesetzten Operators anzulegen, was ein zweites Endwort (A2) ergibt;
. h) das laufende Zwischenwort (Y1) und das zweite Endwort (A2) jeweils an die Eingänge des zusammengesetzten Operators anzulegen, was ein neues laufendes Zwischenwort (Y2) ergibt;
. i) die Operationen d) bis h) selektiv zu wiederholen, in dem jedesmal der Rang I inkrementiert wird, bis der Wert M erreicht ist, was ein Resultatwort (Y16) von B Elementardaten bei einem Verarbeitungsindex vom Wert K ergibt;
. j) die Operationen b) bis i) selektiv zu wiederholen, indem jedesmal der Verarbeitungsindex inkrementiert wird, bis die obere Grenze dieses Index erreicht ist, so daß ein komprimierter Resultat-Datenblock von V Resultatwörtern von je B Elementardaten erhalten werden kann.

2. Vorrichtung nach Anspruch 1,
dadurch gekennzeichnet,
daß die Verarbeitungseinrichtung zur Erstellung des Anfangswerts eines laufenden Zwischenworts (Y1) bei einem Rang I gleich 1 in der Lage ist, folgendes auszuführen:
- das Eingangswort (MG1-1) der ersten Gruppe (Gl)vom Rang I durch das Eingangswort zu ersetzen, dessen Gruppe und dessen Rang durch den Inhalt der Zelle der ersten Tabelle (Q1) mit der Eingangsadresse der Größe M (Q1M-1) gleich dem Rang I definiert sind, was ein drittes laufendes Ersatzwort (M′G1-1) ergibt;
- das Eingangswort (MG2-1) der zweiten Gruppe (G2) vom Rang I durch das Eingangswort zu ersetzen, dessen Gruppe und dessen Rang durch den Inhalt der Zelle der zweiten Tabelle (Q2) mit der Eingangsadresse der Größe M (Q2M-1) gleich dem Rang I definiert sind, was ein viertes Ersatzwort (M′G2-1) ergibt;
- das vierte laufende Ersatzwort (M′G2-1) und das Zusatzwort (T1), das in der Zelle der Zusatztabelle (T) enthalten ist, deren Eingangsadresse der Größe M (TM) einen Wert gleich dem Rang I besitzt, jeweils an die Eingänge des zusammengesetzten Operators (12) anzulegen, was ein drittes Endwort (A3) ergibt;
- das dritte laufende Ersatzwort (M′G1-1) und das dritte Endwort (A3) jeweils an die Eingänge des zusammengesetzten Operators (12) anzulegen, was das Anfangszwischenwort (Y1) bei einem Rang 1 ergibt.

3. Vorrichtung nach Anspruch 1,
dadurch gekennzeichnet,
daß die obere Grenze V des Verarbeitungsindex K gleich M ist.

4. Vorrichtung nach Anspruch 1,
dadurch gekennzeichnet,
daß der zusammengesetzte Operator (12) folgendes aufweist: eine dritte Tabelle P mit zwei solchen Eingängen (P1 und P2) von der Größe 2^{B1} bzw. 2^{B2}, so daß dann, wenn B1 und B2 ganze Zahlen von nicht null sind, die Summe der Exponenten B1 und B2 gleich B ist, und zwar aus Zellen, deren Inhalt einen Wert von 1 bis 2^{B} besitzt und die in der Lage sind, eine nichtlineare Permutation bei der erhaltenen Gesamtheit mit der Größenordnung B von |0,1|, ausgedehnt auf 2·M Wörter durchzuführen, und
einen Operator (22) mit zwei Eingängen derselben Größe B vom Exklusiv-ODER-Typ, wobei der Ausgang (18) des Exklusiv-ODER-Operators mit den Eingängen (P1 und P2) der dritten Tabelle (P) zusammenwirkt, um die spezielle Funktion zu liefern.

5. Vorrichtung, in der die Länge der Gesamtheit der zu verarbeitenden Daten von 2·M·B Elementardaten abweicht, nach Anspruch 1,
dadurch gekennzeichnet,
daß die Vorrichtung außerdem eine zusätzliche Verarbeitungseinrichtung umfaßt, die folgendes aufweist:
- eine Einrichtung zum Ergänzen des Werts der Länge der Gesamtheit der zu verarbeitenden Daten, bis man eine Länge von einem Wert erhält, der ein Vielfaches von M·B Elementardaten und größer als 2 M·B Elementardaten ist, so daß man eine Vielzahl von Gruppen mit je M Wörtern erhalten kann, die jeweils von einer Anzahl B von Elementardaten gebildet sind;
- eine Einrichtung, die in der Lage ist, selektiv die Operationen a) bis j) zu wiederholen, indem jedesmal ein Paar von Gruppen von Wörtern von M·B Elementardaten angelegt wird, bis man nur noch eine einzige resultierende Gruppe von Wörtern von M·B Elementardaten hat;
- wobei diese resultierende Wörtergruppe dieser komprimierte Resultat-Datenblock ist.

6. Vorrichtung nach Anspruch 5,
dadurch gekennzeichnet,
daß die selektive Wiederholung der Operationen a) bis j) bei der Vielzahl von Gruppen von Wörtern von M·B Elementardaten in einem inversen binären Baum stattfindet.

7. Anwendung der Vorrichtung nach einem der Ansprüche 1 bis 6 auf Vorrichtungen zur Sicherung oder Signatur von digitalen Daten.

## Claims

1. Electronic device for processing numeric data, comprising:
- an input (4) for receiving the data to be processed; and
- processing means (10) for transforming the input data in a non-falsifiable manner in a block of condensed result data,
characterised in that the processing means (10) comprise:
- means for breaking down the input data at least into a first group (G1) comprising M first input words (MG1-l) of a respective rank I varying from 1 to M and each formed of an equal number B of data items, and into a second group (G2) comprising M second input words (MG2-l) of a respective rank I varying from 1 to M and each formed of an equal number B of data items;
- first means forming a table (Q1) with two inputs (Q1M and Q1V) of a size M and of a preset value V representing the upper limit of a processing index K respectively, for cells whose content has a discrete value varying from 1 to 2M;
- second means forming a table (Q2) with two inputs (Q2M and Q2V) of sizes M and V respectively for cells whose content has a discrete value varying from 1 to 2M;
- third means forming a table (T) with two inputs (TV and TM) of respective sizes V and M, for cells whose content has a discrete value varying from 1 to 2^{B} for defining a table of auxiliary V.M. words;
- a composite operator (12) for supplying a special function to two inputs of the same size B, forming an exclusive-OR at these inputs (14, 16), followed by a nonlinear permutation on the result of said exclusive-OR;
in that the processing means are capable of :
a) initialising the processing index K at 1;
b) establishing an initial value of a current intermediate word (Y1) for a rank I equal to 1;
c) initialising the rank I at 2;
d) replacing the input word (MG1-2) of the first group (G1) of rank I by the input word whose group and rank are defined by the content of the cell of the first input address table (Q1) of a size M (Q1M-2) equal to the rank I, which gives a first substitute word (M′G1-2);
e) replacing the input word (MG2-2) of the second group (G2) of the rank I by the input word whose group and rank are defined by the content of the cell of the second input address table (Q2) of a size M (Q2M-2) equal to the rank I, which gives a second substitute word (M′G2-2);
f) applying respectively the second current substitute word (M′G2-2) and the auxiliary word (T2) contained in the cell of the auxiliary table (T) whose input address of a size M (TM) has a value equal to the rank I, to the composite operator (12), which gives a first term word (A1);
g) applying respectively the first current substitute word (M′G1-2) and the first term word (A1) to the inputs of the composite operator, which gives a second term word (A2);
h) applying respectively the current intermediate word (Y1) and the second term word (A2) to the inputs of the composite operator, which gives a new current intermediate word (Y2);
i) selectively repeating the operations d) to h), increasing the rank I each time, until the value M is reached, which gives a result word (Y16) of B data items for a processing index of value K;
j) selectively repeating the operations b) to i), increasing the processing index each time, until the upper limit of this index is reached, so that a block of condensed result data of V result words of B data items each can be obtained.

2. Device according to claim 1, characterised in that the processing means, in order to establish the initial value of a current intermediate word (Y1) for a rank I equal to 1 are capable of :
- replacing the input word (MG1-1) of the first group (G1) of rank I by the input word whose group and rank are defined by the content of the cell of the first input address table (Q1) of a size M (Q1M-1) equal to the rank 1, which gives a third current substitute word (M′G1-1);
- replacing the input word (MG2-1) of the second group (G2) of rank I by the input word whose group and rank are defined by the content of the cell of the second input address table (Q2) of a size M (Q2M-1) equal to the rank I, which gives a fourth current substitute word (M′G2-1);
- applying respectively the fourth current substitute word (M′G2-1) and the auxiliary word (T1) contained in the cell of the auxiliary table (T), whose input address of size M (TM) has a value equal to the rank I, to the inputs of the composite operator (12), which gives a third term word (A3);
- applying respectively the third current substitute word (M′G1-1) and the third term word (A3) to the inputs of the composite operator (12), which gives the initial intermediate word (Y1) for a rank 1.

3. Device according to claim 1, characterised in that the upper limit V of the processing index K is equal to M.

4. Device according to claim 1, characterised in that the composite operator (12) has a third table P with two inputs (P1 and P2) of a size 2^{B1} and 2^{B2} respectively, such that, B1 and B2 being integers other than zero, the sum of the exponents B1 and B2 is equal to B, by cells whose content has a value varying from 1 to 2^{B} and capable of defining a non-linear permutation on the whole produced of the order B of I0.1l extended to 2.M words, and an operator (22) with two inputs of the same size B, of the exclusive-OR type, the output (18) of the exclusive-OR operator interacting with the inputs (P1 and P2) of the third table (P) in order to supply the special function.

5. Device in which the length of the whole of the data to be processed is different from 2.M.B data items according to claim 1, characterised in that the device further comprises additional processing means comprising:
- means for making up the value of the length of the whole of the data to be processed until a length is obtained which is a multiple of M.B data items and greater than 2 M.B data items, so that a plurality of groups can be obtained each comprising M words formed respectively of a number B of data items;
- means for selectively repeating the operations a) to j), applying each time a couple of groups of words of M.B data items, until only one group of words resulting from M.B data items is left;
- this resultant group of words being the block of condensed result data.

6. Device according to claim 5, characterised in that selective repetition of the operations a) to j) on the plurality of groups of words of M.B data items is carried out according to a binary inverse tree.

7. Application of the device according to one or other of claims 1 to 6 to devices for certifying or signing numeric data.
